# DEMANDE DE BREVET EUROPEEN

(11) **EP 1 070 613 A1**
(43) Date de publication de la demande: **24.01.2001**
(21) Numéro de dépôt: 00402074.9
(22) Date de dépôt: 21.07.2000
(51) Int. Cl.: B60J 5/04

(54) **Element modulaire de structure de carrosserie de véhicule automobile, et ouvrant comportant un tel élément de structure**

(30) Priorité: 21.07.1999 FR 9909476
(71) Demandeur: Renault, 92100 Boulogne Billancourt (FR)
(72) Inventeur: Demaldent, Jean-Michel, 78580 Maule (FR); Roue, Yves, 78990 Elancourt (FR)

(57) **Abrégé**

1.Elément de structure (1) d'un ouvrant de carrosserie de véhicule comportant une armature supérieure (3,6,7) et une armature inférieure (2), l'armature supérieure (3,6,7) étant adaptée pour guider un vitrage pouvant être manoeuvré entre une position d'ouverture et de fermeture, l'armature inférieure (2) délimitant un espace pouvant recevoir au moins une partie du vitrage en position fermée, caractérisé en ce que les armatures supérieure (3,6,7) et inférieure (2) sont constituées, au moins en partie, par des éléments de profilés (5,6,7,2) et en ce que les deux extrémités (13,14) de l'armature inférieure (2) sont jointes aux deux extrémités correspondantes de l'armature supérieure (3,6,7) par l'intermédiaire d'un premier (4) et d'un deuxième (5) éléments de jonction.

## Description

La présente invention concerne un élément de structure d'un ouvrant de carrosserie de véhicule automobile, notamment d'une porte ou d'un volet, aussi appelé hayon.

Une porte de véhicule automobile, de conception classique, est constituée par un élément principal de structure, également appelé caisson, qui est réalisé sous la forme d'une pièce en tôle emboutie sur laquelle sont rapportés des éléments complémentaires, tels, par exemple, un renfort recevant les charnières d'articulation de l'ouvrant, un renfort horizontal supérieur appelé renfort de bandeau, ou aussi un renfort de serrure.

Toutes ces pièces constituant le caisson et ces éléments complémentaires sont des pièces réalisées par emboutissage et/ou par pliage, nécessitant la mise en oeuvre d'un outillage spécifique de presse particulièrement coûteux, et nécessitant de plus des montages d'assemblage et des opérations de soudage pour leur assemblage.

Afin de conférer une rigidité suffisante à l'élément de structure ou caisson, celui-ci se présente sensiblement sous la forme d'une plaque qui s'étend sur une grande partie du caisson et qui constitue un inconvénient majeur pour l'agencement des autre composants équipant la partie intérieure de la portière, tels que, par exemple, les mécanismes de manoeuvre d'une vitre mobile coulissante.

Selon une conception connue, la porte de véhicule peut comporter une partie supérieure appelée cadre de porte, avec ou sans raidisseur, et qui constitue un cadre pour une vitre fixe ou mobile équipant la porte.

Dans ce cas, l'élément de structure ou caisson doit comporter des agencements particuliers pour l'assemblage et la fixation, par vissage ou par soudage, du cadre de porte, ce qui rend encore plus complexe la réalisation des composants principaux du caisson par emboutissage et soudage.

La publication EP0613798 décrit un ouvrant de véhicule automobile supporté par un caisson, constitué par une armature, comportant un élément supérieur et inférieur, ainsi que deux éléments latéraux. Chaque élément possède une portion réalisée par un profilé dont la section a une forme générale semblable pour tous les éléments. Des éléments additionnels, tels que les moyens pour lever et abaisser la vitre, ou les moyens de fermeture de l'ouvrant, sont attachés à l'armature.

La forme générale du caisson en anneau libère un espace intérieur important, ce qui facilite grandement la mise en place des éléments additionnels.

Toutefois, la structure du caisson décrit dans cette publication permet difficilement d'envisager des modifications du caisson en vue de l'adapter à des contraintes nouvelles, sans avoir à effectuer une modification de l'ensemble de ses constituants.

La présente invention vise à obtenir un caisson d'ouvrant pouvant s'adapter facilement à des contraintes variées par la modification de certains éléments spécifiques.

Dans ce but, elle propose un élément de structure d'un ouvrant de carrosserie de véhicule comportant une armature supérieure et une armature inférieure, l'armature supérieure étant adaptée pour guider un vitrage pouvant être manoeuvré entre une position d'ouverture et de fermeture, l'armature inférieure délimitant un espace pouvant recevoir au moins une partie du vitrage en position fermée, caractérisé en ce que les armatures supérieure et inférieure sont constituées, au moins en partie, par des éléments de profilés et en ce que les deux extrémités de l'armature inférieure sont jointes aux extrémités correspondantes de l'armature supérieure par l'intermédiaire d'un premier et d'un deuxième éléments de jonction.

Selon une autre caractéristique de l'invention, les premier et deuxième éléments de jonction sont réalisés par emboutissage.

Selon une autre caractéristique de l'invention, l'armature supérieure comporte un cadre sur lequel sont rapportés une doublure de cadre et un guide adapté pour guider le vitrage.

Selon une autre caractéristique de l'invention, la doublure de cadre et le guide ont, au moins en partie, une section identique.

Selon une autre caractéristique de l'invention, l'élément de structure comprend une traverse, constituée par un profilé, reliant les premier et deuxième éléments de jonction.

Selon une autre caractéristique de l'invention, la traverse et le premier élément de jonction supportent une troisième pièce emboutie sur laquelle sont fixés les moyens pour lever et abaisser la vitre.

Selon une autre caractéristique de l'invention, le deuxième élément de jonction supporte le système de serrurerie de l'ouvrant.

Selon une autre caractéristique de l'invention, l'élément de structure comporte un premier support de vitre fixe, constitué par un profilé, reliant l'armature supérieure et le premier élément de jonction, et supportant un élément de vitre fixe.

Selon une autre caractéristique de l'invention, le premier support de vitre fixe possède, au moins en partie, une section identique au guide.

Selon une autre caractéristique de l'invention, l'élément de structure comporte un deuxième support de vitre fixe, constitué par un profilé supporté par le premier élément de jonction, et dont une extrémité est juxtaposée au premier support de vitre fixe.

D'autres caractéristiques et avantages de l'invention apparaîtront à la lecture de la description qui va suivre en référence aux dessins annexés dans lesquels :
- la figure 1 est une vue en perspective d'une armature d'ouvrant selon l'invention,
- la figure 2 est une vue en perspective et en éclaté de l'armature de la figure 1,
- la figure 3 est une section selon la ligne III-III de la figure 2,
- la figure 4 est une section selon la ligne IV-IV de la figure 2,
- la figure 5 est une section selon la ligne V-V de la figure 2.

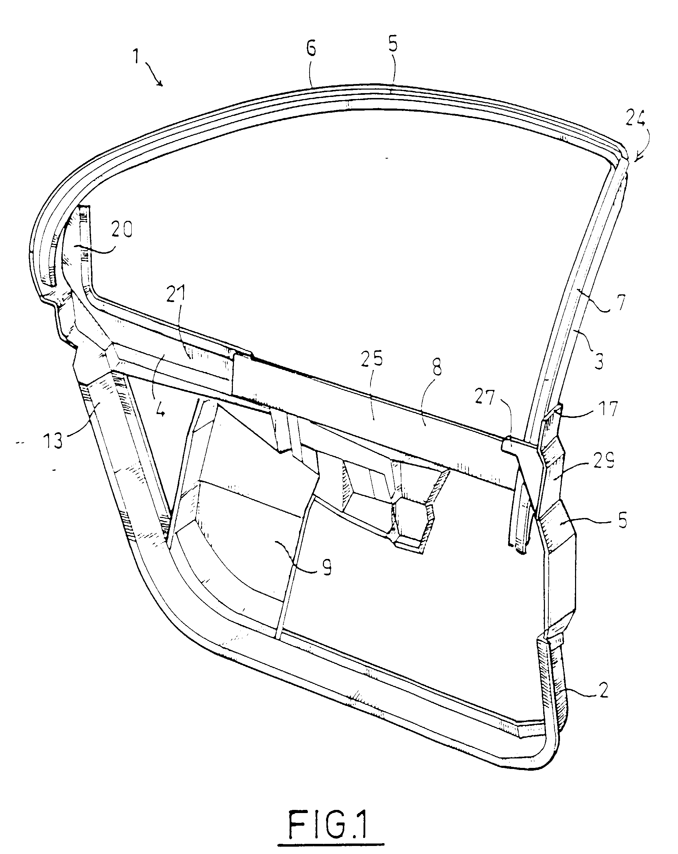

La figure 1 représente un élément de structure 1 d'ouvrant de véhicule selon l'invention. Il se divise en une armature supérieure 3,6,7, et une armature inférieure 2. L'armature supérieure 3,6,7 se compose d'un cadre 3 sur lequel sont montés un guide 7 et une doublure de cadre 6.

L'armature inférieure 2, et les trois éléments composant l'armature supérieure 3,6,7, sont tous constitués par des profilés, qui peuvent être obtenus par extrusion. Les sections de la doublure de cadre 6 et du guide 7 sont sensiblement identiques. Le cadre 3 possède une section constante à l'exception d'une zone 24 où est réalisé un cintrage de rayon relativement faible pour lequel un découpage est réalisé sur le profilé. Le guide 7 et la doublure de cadre 6 présentent une section constante, ils sont montés sur le cadre 3 de part et d'autre de la zone 24 où est réalisé le cintrage.

L'armature inférieure 2 possède une section constante. Elle est formée de façon à obtenir une allure générale en forme d'un U présentant une branche plus longue que l'autre.

L'élément de structure 1 comprend aussi deux éléments de jonction 4,5. Ces éléments 4,5 sont réalisés par emboutissage. Ils permettent de relier les armatures inférieure 2 et supérieure 3. Pour cela, le premier élément de liaison 4 présente deux surface 19 et 20 qui sont respectivement complémentaires des extrémités de l'armature inférieure 2 et du cadre 3. De même, le second élément de jonction 5 possède deux surfaces 22 et 23 qui sont complémentaires respectivement de l'extrémité 14 de l'armature inférieure 2 et d'une partie 16 du cadre 3 adjacente à l'extrémité de celui-ci.

Une traverse 8, sensiblement horizontale, est aussi liée aux deux éléments de jonction 4,5 pour former un renfort de bandeau et délimiter le bord inférieur de l'ouverture de la vitre. Cette traverse 8 est constituée par un profilé de section constante. Une de ses extrémités 25 est montée sur une surface complémentaire 21 du premier élément de jonction 4. L'autre extrémité 26 de la traverse 8 coopère avec une surface du second élément de jonction 5.

Un médaillon 9 est monté sur la traverse 8 et le premier élément de jonction 4. Il est réalisé par emboutissage et est destiné à supporter divers mécanismes non représentés sur les figures. Ces mécanismes peuvent inclure les moyens pour lever et abaisser une vitre montée sur l'élément de structure 1, et au moins une partie des commandes d'ouverture intérieure de l'ouvrant.

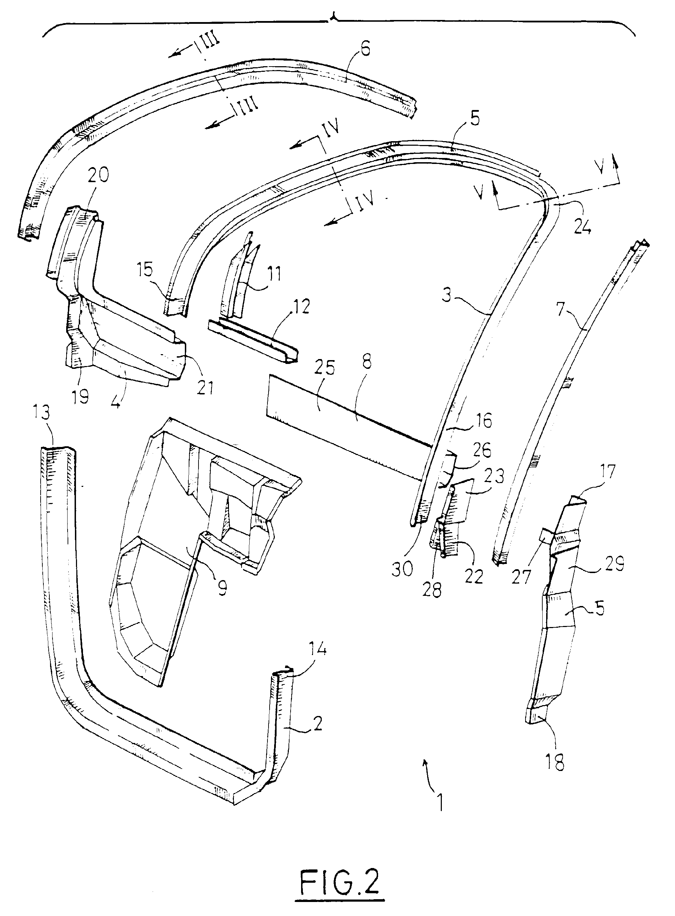

La figure 2 fait apparaître trois éléments dont deux ne sont pas représentés sur la figure 1, le troisième n'étant pas visible sur cette même figure. Il s'agit d'une part de deux supports 11,12 de vitre fixe qui sont montés sur l'élément de structure 1 dans le cas où la vitre est divisée en une première vitre mobile que l'on peut lever ou abaisser par des moyens non représentés, et en une seconde vitre qui, elle, reste fixe par rapport à l'élément de structure 1. Le premier support de vitre fixe 12 est monté sur le premier élément de jonction 4, Le second support de vitre fixe 11 relie l'armature supérieure 3,6,7 et le premier élément de jonction 4. Ces deux supports 11,12 de vitre fixe sont des profilés. La section du premier support 12 de vitre fixe a la forme d'un U. La section du second support 11 de vitre fixe est sensiblement identique à celle de la doublure de cadre 6 et du guide 7.

Le troisième élément, une paroi d'appui 10, est une pièce de géométrie complexe qui remplit principalement deux fonctions différentes. Elle est placée entre le deuxième élément de jonction 5 d'une part, et la traverse 8 et le cadre 3 d'autre part. Elle comprend une surface 23 sensiblement plane, sur laquelle vient en appui l'extrémité 26 de la traverse 8. Cette surface 23 permet une meilleure répartition des efforts exercés par la traverse 8. La paroi d'appui 10 comprend aussi deux surfaces 27,28 coopérant respectivement avec l'extrémité 30 du cadre 3 et la surface 29 du deuxième élément de jonction 5. Le cadre 3 est donc globalement fixé par trois points de fixation, dont deux, l'extrémité 30 et la zone 16, sont relativement proches l'un de l'autre, permettant une bonne tenue en flexion du cadre 3 sur le deuxième élément de jonction 5.

Un mécanisme de serrurerie (non représenté) peut être monté sur le deuxième élément de jonction 5. En outre, le premier élément de jonction 4 peut supporter un dispositif de rétrovision.

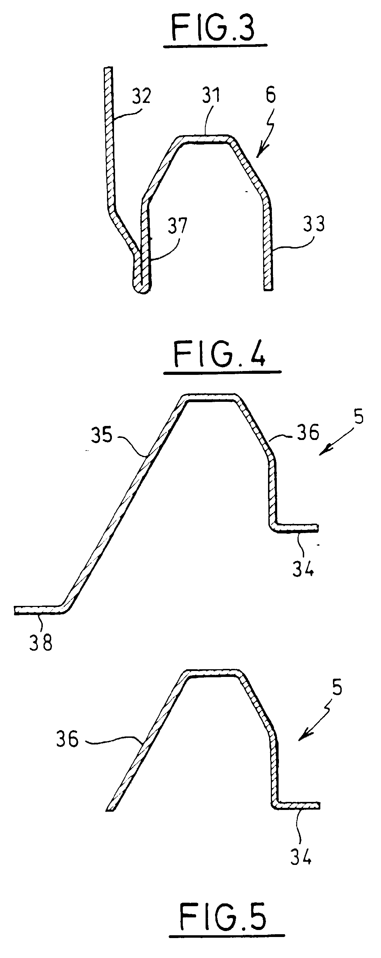

La figure 3 représente la section de la doublure de cadre 6, qui est, préférentiellement, identique à celle du guide 7, et du deuxième support 11 de vitre fixe. Elle comprend une première partie en forme de U comportant une base 31 et deux branches 33 et 37. Cette forme particulière permet, pour le guide 7, de contrôler le déplacement de la vitre lors de son ouverture et de sa fermeture, et pour la doublure de cadre 6, de recevoir l'extrémité supérieure de la vitre lorsqu'elle est en position fermée. Une branche 37 du U est rabattue sur elle-même pour former un rebord 32.

La section du cadre 3, représentée sur la figure 4, est constante sur toute sa longueur, exceptée dans la zone 24 de cintrage. Elle est en forme d'un U dont les deux branches 35,36 sont légèrement évasées. Cette forme générale permet d'assurer la rigidité du cadre 3. L'extrémité de chaque branche 35,36 forme un rebord 38,34. L'assemblage de la doublure de cadre 6 et du guide 7 sur le cadre 3 est réalisé de la façon suivante : la base 31 est placée contre la branche 35 de façon à ce que le rebord 32 vienne en contact avec le rebord 38, et la branche 33 avec le rebord 34. Le rebord 23 peut alors être serti sur le rebord 33 de façon à fixer les deux profilés.

La figure 5 représente la section du cadre 3 dans la zone de cintrage 24. Dans cette zone, la branche 35 de la section représentée sur la figure 4 est coupée, formant ainsi une branche libre 36 sans rebord recourbé. Cette disposition permet la réalisation du cintrage du cadre 3, tout en permettant le passage de la doublure de cadre 6 et du guide 7, qui se rejoignent selon un angle dépendant de la forme du coin supérieur de la vitre. En effet, le plus souvent, ce coin présente un angle plus ou moins important, dû à la fois à des contraintes de réalisation de la vitre, et à des raisons esthétiques. Dans le cas où la vitre comporte un coin supérieur arrondi, et qu'il est possible d'adapter le cintrage du cadre 3 à la forme de ce coin, il n'est plus nécessaire de découper une partie du profilé qui peut alors conserver sur toute la longueur la section représentée sur la figure 4. La doublure de cadre 6 et le guide 7 sont alors eux aussi cintrés et restent liés au cadre 3 sur toute sa longueur. Il est même possible d'envisager alors la conception de la doublure de cadre 6 et du guide 7 en une seule pièce.

L'élément de structure 1 selon la présente invention permet, de façon avantageuse, de modifier seulement certaines parties de l'élément de structure 1, tout en conservant à l'identique d'autres constituants de l'élément de structure. Dans le cas où l'on souhaite modifier la longueur de l'ouvrant selon le type de carrosserie du véhicule, il suffit de modifier l'armature inférieure 2, l'armature supérieure 3 et la traverse 8 tout en conservant les éléments de jonction 4,5. Or, comme les éléments à modifier sont des profilés, il suffit simplement de choisir la longueur de profilé voulue selon le type d'ouvrant à réaliser. Il est alors possible d'avoir des outils de conception de profilés uniques pour la réalisation de toute une gamme d'ouvrants.

Un second exemple de la modularité de l'élément de structure selon l'invention est de permettre une évolution spécifique de certains éléments particuliers n'entraînant pas de modifications des autres éléments. Ainsi l'aspect extérieur du véhicule peut imposer des modifications particulières de l'armature supérieure, en particulier du guide et de la doublure de cadre. En outre, une évolution technique ou de matériaux peut être réalisée sur un élément particulier, comme par exemple la traverse.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

En particulier, les charnières du véhicule peuvent être supportées par l'armature inférieure, voire par le premier élément de jonction, ce qui permet de conserver la modularité des autres constituants de l'élément de structure. De plus, les armatures inférieure ou supérieures peuvent ne pas être constituées par un unique profilé mais peuvent comprendre plusieurs portions de profilés reliées par des pièces embouties ou de fonderie, les portions de profilés permettant d'assurer la modularité de l'ensemble de l'élément de structure.

## Revendications

1. Elément de structure (1) d'un ouvrant de carrosserie de véhicule comportant une armature supérieure (3,6,7) et une armature inférieure (2), l'armature supérieure (3,6,7) étant adaptée pour guider un vitrage pouvant être manoeuvré entre une position d'ouverture et de fermeture, l'armature inférieure (2) délimitant un espace pouvant recevoir au moins une partie du vitrage en position fermée, les armatures supérieure (3,6,7) et inférieure (2) étant constituées, au moins en partie, par des éléments de profilés (5,6,7,2), les deux extrémités (13,14) de l'armature inférieure (2) étant jointes aux deux extrémités correspondantes de l'armature supérieure (3,6,7) par l'intermédiaire d'un premier (4) et d'un deuxième (5) éléments de jonction, caractérisé en ce qu'au moins l'un des profilés (5,6,7,2) est formé pour présenter au moins une zone courbe.

2. Elément de structure (1) selon la revendication 1, caractérisé en cc que les premier (4) et deuxième (5) éléments de jonction sont réalisés par emboutissage.

3. Elément de structure (1) selon l'une des revendications 1 ou 2, caractérisé en ce que l'armature supérieure (3,6,7) comporte un cadre (3) sur lequel sont rapportés une doublure de cadre (6) et un guide (7) adapté pour guider le vitrage.

4. Elément de structure (1) selon la revendication 3, caractérisé en ce que la doublure de cadre (6) et le guide (7) ont, au moins en partie, une section identique.

5. Elément de structure (1) selon l'une des revendications 1 à 4, caractérisé en ce qu'il comprend une traverse (8), constituée par un profilé, reliant les premier (4) et deuxième (5) éléments de jonction.

6. Elément de structure (1) selon la revendication 5, caractérisé en ce que la traverse (8) et le premier élément de jonction (4) supportent une troisième pièce emboutie (9) sur laquelle sont fixés les moyens pour lever et abaisser le vitrage.

7. Elément de structure (1) selon l'une des revendications 1 à 6, caractérisé en ce que le deuxième élément de jonction (5) supporte le système de serrurerie de l'ouvrant.

8. Elément de structure (1) selon l'une des revendications 1 à 7, caractérisé en ce qu'il comporte un premier support de vitre fixe (11), constitué par un profilé, reliant l'armature supérieure (3,6,7) et le premier élément de jonction (4), et supportant un élément de vitre fixe.

9. Elément de structure (1) selon les revendications 8 et 3 pris en combinaison, caractérisé en ce que le premier support de vitre fixe (11) possède, au moins en partie, une section identique au guide (7).

10. Elément de structure (1) selon l'une des revendications 8 ou 9, caractérisé en ce qu'il comporte un deuxième support de vitre fixe (12), constitué par un profilé, supporté par le premier élément de jonction (4), et dont une extrémité est juxtaposée au premier support de vitre fixe (11).
